(19) Europäisches Patentamt
European Patent Office
Office européen des brevets

(11) **EP 4 019 356 A1**

(12) **EUROPEAN PATENT APPLICATION**

(43) Date of publication:
**29.06.2022 Bulletin 2022/26**

(21) Application number: **21198512.2**

(22) Date of filing: **23.09.2021**

(51) International Patent Classification (IPC):
**B60W 50/00** (2006.01)  **B60W 60/00** (2020.01)
**B60W 40/09** (2012.01)  **G06V 20/59** (2022.01)
**G06V 40/16** (2022.01)

(52) Cooperative Patent Classification (CPC):
**B60W 60/0013; B60W 40/09; B60W 50/00;**
**B60W 60/00253; G06V 20/597; G06V 40/168;**
B60W 2050/0083; B60W 2420/54; B60W 2540/21;
B60W 2540/22; B60W 2540/221; B60W 2556/10;
B60W 2556/50; B60W 2720/106; B60W 2720/125

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.12.2020 US 202017131511**

(71) Applicant: **INTEL Corporation
Santa Clara, CA 95054 (US)**

(72) Inventors:
• **OBORIL, Fabian**
  **75139 Karlsruhe (DE)**
• **BUERKLE, Cornelius**
  **76137 Karlsruhe (DE)**
• **SCHOLL, Kay-Ulrich**
  **76316 Malsch (DE)**

(74) Representative: **2SPL Patentanwälte PartG mbB
Landaubogen 3
81373 München (DE)**

(54) **PASSENGER DISCOMFORT MEASUREMENT DURING VEHICLE MANEUVER**

(57)     System and techniques for passenger discomfort measurement during vehicle maneuver are described herein. A set of biomechanical measurements of a passenger in a vehicle may be obtained. A subset from the set of biomechanical measurements with members that correspond to distress in the passenger are selected and a search of vehicle actions performed that correspond to the subset of biomechanical measurements in time. Then, modification to future application of the vehicle action is made to reduce distress in passengers.

**FIG. 1**

EP 4 019 356 A1

**Description**

**TECHNICAL FIELD**

Embodiments described herein generally relate to automated vehicle control and more specifically to passenger discomfort measurement during vehicle maneuver.

**BACKGROUND**

Mobility-as-a-Service (MaaS) is a concept whereby vehicles are managed and provided to transport passengers. MaaS generally involves using fleets of automated vehicles to provide the passenger transportation. Such automated vehicles generally use sensors and control hardware to reduce or eliminate the need for a human driver or pilot of the vehicle. An MaaS system generally includes an interaction between the service and the user through an app (e.g., mobile phone application) and a network. The network also generally connects the MaaS vehicles to each other, route planning services, or other hardware to enable a robot taxi (robotaxi) service or the like.

**BRIEF DESCRIPTION OF THE DRAWINGS**

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.

FIG. 1 is a block diagram of an example of an environment including a system for passenger discomfort measurement during vehicle maneuver, according to an embodiment.
FIG. 2 illustrates directions of acceleration experienced by an automated vehicle, according to an embodiment.
FIG. 3 illustrates an example of a data flow between entities, according to an embodiment.
FIG. 4 illustrates an example of an in-vehicle system, according to an embodiment.
FIG. 5 illustrates an example of a system remote from a vehicle, according to an embodiment.
FIG. 6 illustrates a flow diagram of an example of a method for passenger discomfort measurement during vehicle maneuver, according to an embodiment.
FIG. 7 is a block diagram illustrating an example of a machine upon which one or more embodiments may be implemented.

**DETAILED DESCRIPTION**

A good ride experience is important in mobility services. A good ride experience not only help ensure continued use of the service by passengers, but may also mitigate health issues, such as motion sickness. In traditional mobility services—such as taxis—passengers generally have direct contact with the driver and may share problems with the ride. When a human driver is absent, such as in automated vehicle MaaS, passengers no longer have a direct connection with another human experiencing the same ride that is experienced by the passenger. Thus, it may be difficult to determine when the user experiences discomfort in a ride, and to what extent the discomfort is caused by the ride.

Passenger ride experience depends to a great extent on the driving style employed for the vehicle and the chosen route. Usually, abrupt acceleration (e.g., heavy braking, increased application of engine power, turning suddenly, etc.) or roads through unpleasant areas negatively impact the ride experience. Conversely, in many instances, using a smooth driving style improves the passenger's perception of the ride experience. Because the ride experience is the ride perceived by a passenger, the ride experience is very individual and situation specific. For example, while on one day, a person may like to get quickly from point A to point B—e.g., because of an important appointment)— and so is tolerant, or even welcoming, of an aggressive driving style, on another day the same person prefers a smooth, slow and steady ride instead.

Because the ride experience is important to a successful MaaS implementation, there is an issue of measuring rider comfort during trips, and using those measurements to improve MaaS, for a given trip and beyond. An example system to accomplish such rider comfort measurements includes in vehicle monitoring of biomechanical measurements of the user. Such biomechanical measurements may include such things as heart rate, facial expressions, or vocal utterances of the user. The biomechanical measurements may be classified to identify time periods in which the user experiences distress. These time periods may then be correlated to maneuvers performed by the vehicle to identify vehicle behavior that may have caused the distress. The system may then modify the parameters of a maneuver to reduce passenger discomfort in the current ride or in a future ride. Further, the metrics collected during the rides of various passengers may be aggregated to improve ride quality across many different riders.

In an example, the system may be implemented as a two-level system to improve the overall user experience in MaaS by improving the passenger comfort during rides. The system includes an in-vehicle subsystem that monitors the passenger comfort, correlates low comfort levels with currently executed maneuvers or road segments, and automatically adapts the driving style of an automated vehicle. The second level of the system is a cloud-based subsystem that receives anonymized ride data from the vehicles and, possibly, user feedback (e.g., voting or rating) for a last ride of the user. The cloud-based subsystem may then use data mining techniques to extract commonly disliked road segments or maneuvers. This information may be used to extend map data (e.g., through a high-definition map tile) to improve the ride experience for future rides. In an example, the cloud-based subsystem may compute statistics from road segments about the behavior of other traffic participants which also might lead to passenger discomfort. Again, the information may be used to update map information, or adjust automated driving parameters, to dynamically adapt and improve passenger ride experiences generally. Additional examples and details are described below.

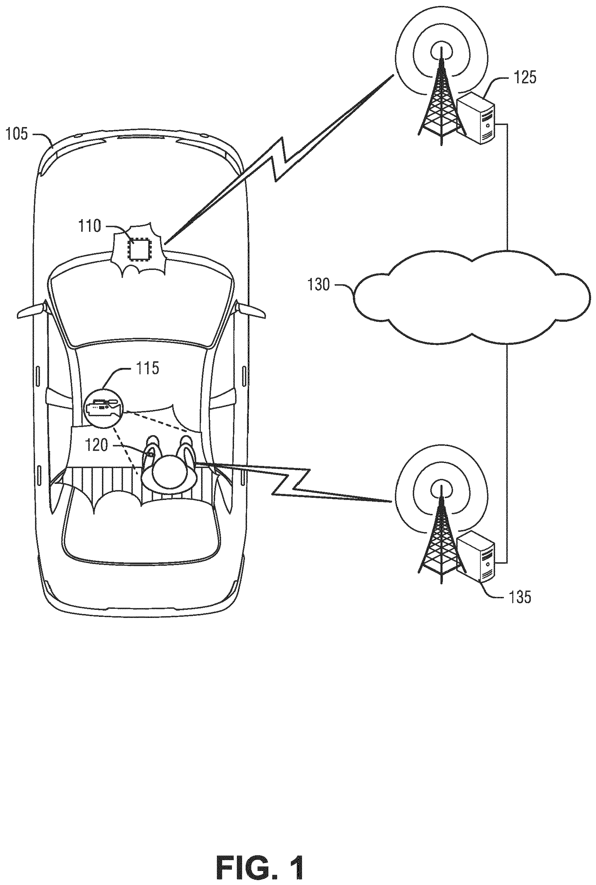

FIG. 1 is a block diagram of an example of an environment including a system for passenger discomfort measurement during vehicle maneuver, according to an embodiment. As illustrated the environment includes a vehicle 105 equipped with processing circuitry 110 to implement automated driving tasks. Thus, the processing circuitry 110 may be, or included in, a navigation control unit of the vehicle 105, a media control unit of the vehicle 105, or other driving control systems of the vehicle 105. Here, the processing circuitry 110 includes a transceiver to communicate with a MaaS service 125. In an example, the vehicle 105 includes a sensor 115 arranged to observe a passenger riding in the vehicle. The passenger may include a device, such as a wrist worn device 120 (e.g., a smartwatch), or a mobile phone that connects to a user service 135 (e.g., a cellular provider). The user service 135 may be communicatively coupled to the MaaS service via a cloud or network 130 (e.g., the Internet).

During operation, the processing circuitry 110 is configured (e.g., via software, hardware design, or a combination of the two) to obtain (e.g., retrieve or receive) a set of biomechanical measurements of the passenger. The biomechanical measurements are measurable properties that relate to a physical condition of the passenger. Such measurements may be fairly direct, such as a heart rate measured by the wrist-worn device 120, or less direct, such as a vocal moan or other utterance. When a given biomechanical measurement is made, a time period is captured for the measurement. The time period may be represented as a timestamp with a predefined sampling frequency. In an example, the time period may include start and stop times to explicitly define the time period. In an example, a biomechanical measurement in the set of biomechanical measurements includes an applicable time period. The time period is used to correlate user comfort with driving conditions (e.g., a maneuver performed by the vehicle 105) as described below.

There may be several different sources from which the processing circuitry 110 may obtain the biomechanical measurements. In an example, a biomechanical measurement is retrieved from a device of the passenger. For example, the passenger may have a mobile phone, tablet, or other personal electronic device that either stores, or measures, the biomechanical measurement. The processing circuitry 110 may pair (e.g., through a personal area network such as defined by IEEE 802.15 standards) or otherwise connect with the device and obtain the biomechanical measurements. In an example, the device is a wrist-worn device 120, such as a smart watch, fitness band, etc. Other types of devices, such as a chest band, a heart monitoring device, etc., may also be used. An advantage to such user devices generally comes from the intimate nature of such devices with the passenger's body. Thus, these devices may provide relatively accurate measurements of the passenger's heart rate, which is a useful measurement of stress.

In an example, the processing circuitry 110 is configured to obtain the set of biomechanical measurements from a sensor 115 mounted in the vehicle 105. The in-vehicle sensor 115 may provide a few advantages, as it is consistent across rides and passengers, whereas passenger possessed devices may not be. Also, the sensor 115 may use power or processing capabilities that are absent on low-power or embedded devices commonly available to passengers. These abilities may include sophisticated signal processing or artificial intelligence classifications, varying emitters (e.g., infrared emitters for touchless thermometers or depth cameras), etc. Moreover, often, the sensor 115 may have a perspective on the passenger that is generally not available to a worn or carried device, such as a view of the passenger's face.

The sensor 115 may be any single or combination of a variety of sensors. Examples of the sensor 115 includes a visible light spectrum camera, a depth camera, a thermal camera, a touchless thermometer, or a microphone. The biomechanical measurement captured by the sensor 115 varies based on the sensor. For example, where the sensor is a visible light spectrum camera, facial expressions (e.g., facial action coding system (FACS) or the like) may be captured to ascertain user emotions. A thermometer may capture absolute, or changes, in user facial temperature. A microphone may capture vocal utterances, such as grunts, groans, screams, etc. of the passenger. Although many of the biomechanical measurements described herein are specific to discomfort, signs of pleasure or relaxation may also be captured, because understanding what makes passengers happy may be as important as discovering what makes passengers unhappy.

The processing circuitry 110 is configured to select a subset from the set of biomechanical measurements. The subset of measurements corresponds to distress (e.g., discomfort) in the passenger. Thus, a variety of measurements that are indecipherable, or do not represent an unpleasant trip by the passenger, are removed to more efficiently identify areas of the ride to improve upon. As noted above, in an example, pleasure, or merely comfort, may be selected to identify parts of the ride that are enjoyed, or well tolerated, by the passenger. Generally, distress provides room for improvement (e.g., changes to the driving style or route) while contentment provides evidence that a change should not be made. This last element may be important to understand aggregated user experiences, where a particular driving style is enjoyed by most. Here, a distressed passenger experience generally should not be given too much weight in changing automated vehicle behavior. Rather, a more tailored, user preference, modification may be in order.

The processing circuitry 110 is configured to search, or filter, maneuvers performed by the vehicle 105 to find (e.g., identify) a maneuver operating in a time that overlaps a time period from a member of the subset. Here, the processing circuitry 110 is correlating the passenger discomfort to behaviors of the vehicle 105. A maneuver is driving control of the vehicle 105, such as increasing motor output, braking, or turning. A maneuver may also include a route selection. Route selection may be important as, for example, traveling a safe speed on a twisty road imparts greater lateral acceleration on the vehicle 105, and thus the passenger. Other factors of route selection may include bumpy roads—such as may be caused by cobblestones, potholes, speed bumps, etc.—noisy roads, or dusty roads, among others.

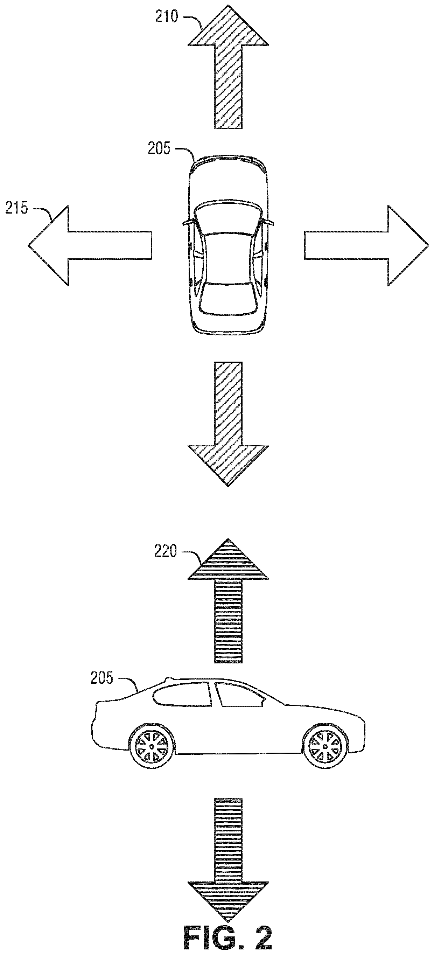

After correlating a maneuver to passenger discomfort based on cooccurrence in time, the processing circuitry 110 is configured to modify a future application of the maneuver. Thus, the processing circuitry 110 attempts to mitigate future passenger discomfort by changing the behavior of the vehicle 105. In an example, the maneuver includes an acceleration in a longitudinal, lateral, or vertical direction with respect to the vehicle. Examples of these types of acceleration are illustrated in FIG. 2. Other types of acceleration may include pitch or roll. Here, the sensed movement of the passenger is understood to be a possible source of discomfort. Thus, the processing circuitry 110 attempts to reduce this sensation of movement for the passenger. Accordingly, in an example, modifying a future application of the maneuver includes reducing the acceleration. Reducing the acceleration may include changing an absolute value of the acceleration (e.g., maintaining an upper bound for an acceleration) or a frequency of acceleration. The second example addresses oscillations that may occur to cause illness in the passenger. Thus, even if the acceleration is below an upper bound, the frequency of acceleration changes may be reduced to make a passenger more comfortable.

In an example, the acceleration is based on a route traveled by the vehicle. Here, reducing the acceleration includes selecting a different route. Again, the route may impart necessary acceleration (e.g., bumps at an acceptable rate of speed, lateral acceleration from turns or twists in the road, etc.) that impact the passenger. Changing the route to reduce these accelerations may provide additional comfort to the user. A new leg of the route may be selected based on route leg characteristics. Thus, if an uncomfortable leg of a route is detected, its characteristics, such as rate of speed, texture, radii of curves, etc., may be compared to future legs of the route to identify legs to avoid.

The is an example in which accelerations may be increased. If a passenger is anxious about getting to a destination, such as being late for an appointment, and two routes are equally (within a threshold) quick, the passenger may be comforted by a hurried feel to the trip. Thus, in this example, the route with greater opportunity to impart accelerations (e.g., a twisty road) may be selected to assure the passenger that the vehicle 105 is speeding the passenger to the destination.

The modification of the maneuver may be applied to a current trip for the passenger, to a future trip for the passenger, or to trips by other passengers (current or future). Generally, modifying a current trip may be entirely managed by the processing circuitry 110. These modifications may include reducing a travel rate (e.g., speed) through corners, increases the time over which increase motor output is supplied, increase the time over which braking output is supplied, increase the radius of a turn, etc. Some modifications may include choosing a different leg (e.g., road, path, etc.) for a future leg of the route. In general, the modifications attempt to smooth the ride for the passenger. As noted above, in some cases, the modification may make the ride rougher. Here, the goal is to give the passenger a sense of urgency when, for example, the passenger is anxious about the length of a trip.

For future trips of the passenger, or for different passengers, the processing circuitry 110 is configured to share trip information to the MaaS service 125. The MaaS service 125 may be configured to maintain a user profile for the passenger. Here, individual deviations from a norm may be tracked and given to the vehicle 105 to personalize the trip for the passenger. The MaaS service 125 may also query the user (e.g., through network 130 to the user service 135) to obtain a rating (e.g., opinion) about a trip. When considering riding maneuvers for other users, the passenger may be categorized, such that discomfort queues may be matched to other users, enabling a similar improvement of experience across the group. In an example, the personally identifiable data that is shared with the MaaS service 125 is anonymized to protect the passenger's privacy. In an example, the MaaS service 125 aggregates the measured and reported experiences of users to provide routing suggestions, or driving suggestions to automated vehicles, such as through a layer in an HD map.

FIG. 2 illustrates directions of acceleration experienced by an automated vehicle, according to an embodiment. The three types of acceleration illustrated with the vehicle 205 are longitudinal 210, lateral 215, and vertical 220. The sign of the longitudinal 210 acceleration is generally positive to the front of the vehicle 205 and negative to the rear of the vehicle 205. Thus, braking would generally result in a negative longitudinal 210 acceleration and increased applied of motor power results in a positive longitudinal 210 acceleration. Lateral 215 acceleration generally occurs during steering maneuvers. The tighter (e.g., smaller radius) the turn, the greater the lateral 215 acceleration. Vertical 220 acceleration is often not a control input of a terrestrial vehicle but may be with an airborne or waterborne vehicle. Further, vertical 220 acceleration in a terrestrial vehicle may be controlled by selecting different routes that avoid steep hills, oscillations (e.g., washboard roads), or other features over which the vehicle 205 rises or falls.

The following provides additional details about data flow, an in-vehicle system, and a cloud-based system to facilitate passenger discomfort measurement and mitigation. For the discussion, consider an example of two different passengers: one person (Person A) feels very uncomfortable at higher speeds and prefers a smooth and steady ride; then, there is another person (Person B) that, because of high time pressure, becomes bad-tempered if the speed is too slow. Both take the same route and the same MaaS. In this example, whenever Person A is satisfied, Person B is not, and vice versa. Hence, it is important that passenger comfort level is sensed, monitored, and analyzed for each passenger.

Further consideration is given to a scenario in which there is a third and fourth person—namely Person C and Person D-that have the same preferences as Person A, and take the same route at a later point in time. The monitoring-and-analysis of passenger A demonstrated that, despite going slowly, the comfort level of Person A and Person C was very low on certain road segments—maybe due to many very tight bends. If the vehicle uploads a correlation between the situation where the low comfort level was detected, and the situation itself into a cloud-based analysis system, this cloud-based system could possibly detect undesirable road segments, which may then be used for future route planning, by extending the map content (e.g., map layers, navigation directives, etc.). As a result, the next passenger, Person D, would use another route, avoid low comfort levels for this person. Hence, the cloud-based analysis system may improve not only the current ride experience, but also pro-actively improve future ride experiences.

As it is sometimes very difficult to measure a passenger's comfort level, even with dedicated sensors, a user feedback system may be used to let the system know about the overall passenger satisfaction with the ride in general and with important factors (e.g., comfort, fear, time, etc.). Together with measurements that are available in vehicles—such as acceleration, traffic density, safety layer intervention, etc.—conclusions about driving style preferences may be made on a statistical basis as well possibly identifying one or more situations that lead to the overall trip rating.

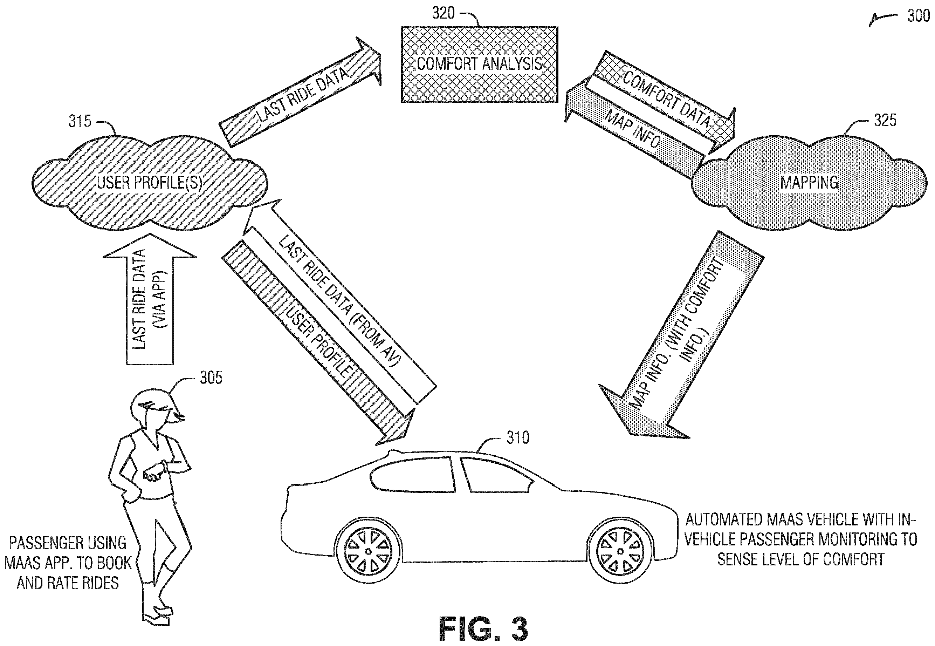

FIG. 3 illustrates an example of a data flow 300 between entities, according to an embodiment. As illustrated a vehicle 310 includes an in-vehicle system. The in-vehicle system senses comfort and wellbeing of a current passenger 305, using in-vehicle sensors—such as acceleration sensors, cameras, etc.—devices of the passenger 305—such as a smart watch, heart monitor, mobile phone, etc.—or any combination of the two. The passenger 305 devices may also enable active feedback, such as praise, complaint, or instructions.

The in-vehicle system correlates a low comfort level with the current maneuver or a road segment and automatically (e.g., without human intervention) adapts the driving style of the vehicle 310 when a low comfort level for a passenger was detected (e.g., driver slower, smoother, with less acceleration etc.).

The illustrated cloud-based system includes user profiles 315, comfort analysis 320, and mapping 325 capabilities. Generally, the in-vehicle system accepts profile information 315 for the passenger 305 and mapping 325 to modify its operations and provides trip data to the user profile 315. Thus, the cloud-based system maintains or collates ride data and user feedback and analyzes ride data—often in an anonymized manner to respect user privacy—to find common patterns among different passengers to identify maneuvers and road segments that are causing low comfort levels. With respect to the comfort analysis 320, filters may be used to exclude situations that are caused by misbehaviors of other traffic participants. For example, if an aggressive braking maneuver was applied to avoid hitting an unexpected cut-in vehicle, even if the passenger 305 is discomforted, there was nothing that the vehicle 310 could realistically do to prevent such an occurrence in the future. However, if such cut-ins are frequent upon a leg of a route, then perhaps the route leg should be avoided. The differences will be discovered via a statistical analysis of many passengers to prevent outliers from destructively interfering with route planning.

The cloud-based system updates mapping 325 data with the previous results (e.g., comfort conclusions), to enable others with access to the mapping 325 to avoid using road segments causing low comfort. Here, future routing requests will be labeled with a "high-comfort" route, in addition to the normal routes (e.g., shortest, fastest, etc.). Here, an accumulation of situations is considered where other traffic participants' behaviors often lead to an emergency reactions (e.g., safety systems—such as Responsibility-Sensitive Safety (RSS) or Safety Force Field (SFF)—resulting in the vehicle (e.g., ego vehicle) acting in predictively precautious way at these places resulting in less discomfort for the passengers. In an example, map data may be updated to include adaptive safety system parameters, loosening or tightening buffer zones, for example, between vehicles to reduce hazardous situations.

Although many of the examples discussed herein address terrestrial vehicles ferrying passengers, the system and arrangement of operations may be applied to many different transportation solutions. For example, given human-operated taxis, the same techniques may be used to identify passenger discomfort and select routes to improve passenger comfort. The system may even suggest that a driver slow down, or smooth out turns, in order to modify the driving style of the driver. Other transportation systems, such as trams, busses, bicycles, scooters, etc. may also benefit by identifying passenger discomfort and, at least, providing information to select routes or route legs that increase passenger comfort.

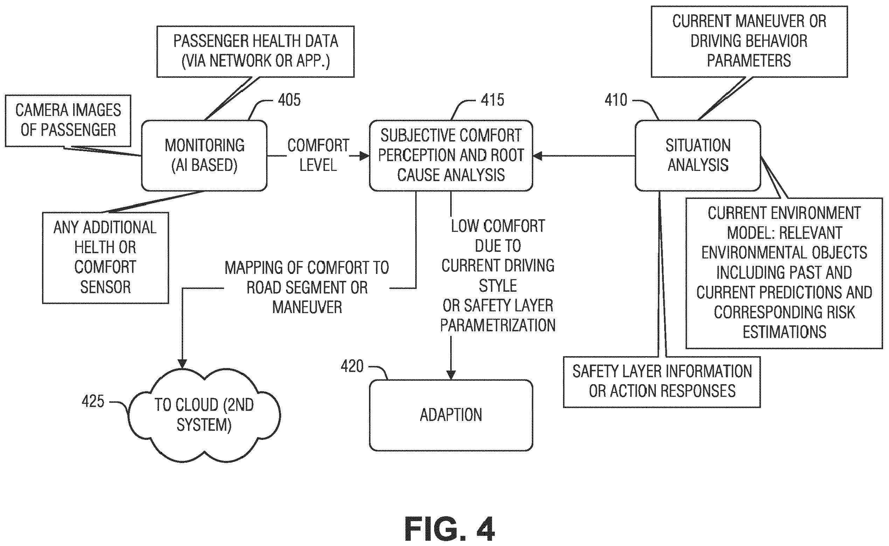

FIG. 4 illustrates an example of an in-vehicle system, according to an embodiment. The illustrated system includes a monitoring component 405, analysis components 410 and 415, and an adoption component 420. The monitoring component 405 may use in-vehicle cameras, or other sensors, to monitor body language or facial expressions of the passenger. In an example, the passenger may grant access to smart health sensor data, such as the passenger's smartwatch data, that is collected by the monitoring component 405. In an example, the most the passenger may grant access to the health data through a MaaS mobile App. Here, the vehicle and the device running the mobile App may negotiate a private (e.g., encrypted) communication channel to enable the vehicle secure access to the health data. The connection between the monitoring component 405 and the passenger device may use Bluetooth, WiFi, or NFC. In an example, the passenger and the vehicle may setup a direct connection using any communication protocol, which may involve more user effort than once granting access in the App. In addition, there might be other suitable sensors integrated into the vehicle (IR-cameras, heart rate sensor integrated in seats, etc.) that may be used for the comfort monitoring as well.

In an example, the monitoring component 405 continuously processes new sensor data or the smart health data if available. In an example, the data is provided to an artificial intelligence system to classify the current well-being of the passenger. In an example, the output of the AI system is a comfort level. In an example, the comfort level may be a normalized real number value between zero (the lowest level of comfort) and one (the highest level of comfort. Thus,

$$\text{Comfort Level } CL = f(image, health\ data) \in [0,1]$$

The analysis component, such as the root cause analysis component 415 or the situation analysis 410, may use the comfort level *CL* together with map information—such as from a current road segment obtained by map matching the GPS position of the vehicle to the map—and information about the current driving situation, to create a correlation between the comfort level and the current driving behavior. In an example, if the passenger's comfort level is low, the adaption component 420 may be used to change the driving style of the automated vehicle.

To create a mapping between situation and *CL,* the *CL* may be tracked and aggregated (e.g., averaged, exponential moving average, weighted average, etc.) over time. Such aggregation may be useful to smooth outputs from the monitoring component 405 may output noise, or outlier data, that may unduly affect the driving behavior model, such as by triggering an immediate reaction by the vehicle when no action should be taken. If, however, the vehicle continuously follows a leading vehicle too closely in the eyes of the passenger, the *CL* will decrease with repeated warnings or continued discomfort by the user over time, resulting in a trigger to adapt the driving style, if the averaged *CL* is too low. The following table provides some example correlations or mappings between the *CL* and a situation:

| Time | Road Segment ID | Maneuver/Situation | Avg. CL |
|------|-----------------|--------------------|---------|
| 0-10 | 111311245 | 100 km/h, follow lead vehicle | 0.5 |
| 11-13 | 111311247 | Slow-down to 50 km/h with 2m/s$^2$ | 0.8 |
| 14-30 | 111311786 | Drive with 50km/h, straight | 0.1 |

In an example, a table similar to this one may be transmitted (e.g., to the cloud 425) after the end of a ride or in pieces during the ride. The cloud 425 here supports the MaaS provider for the vehicle.

In an example, a database of several situation-maneuver classes may be created that cover different driving profiles (e.g., velocity, acceleration, acceleration rate, etc.), different road segments (e.g., traffic light intersection, all-way stop intersections, highway, inner-city road, country lanes, etc.), and different driving behaviors (e.g., following vehicle lead, lane change, evasive maneuver, etc.). The records may then be compared to determine combinations that increase *CL.* In an example, a machine learning system, such as an AI, may be used to select a best fit combination of factors to combine. This is similar to an Operational Design Domain (ODD) identification likely to be used in future automated vehicles. In an example, safety systems, such as RSS, or driving risk estimation approaches, may be used to infer additional situation-specific information to provide a more comprehensive mapping of *CL* to a situation.

In general, as many aspects of a current situation are considered. Otherwise, a correlation between vehicle parameters that influence driving behavior and the passenger's comfort level maybe wrong, worsening rather than improving a passenger ride experience. Specifically, maneuvers performed to address unforeseen and unlikely to be repeated actions, such as a sudden braking upon the unexpected loss of tire pressure or swerving to avoid a vehicle running from the police, are detected and removed from consideration for behavioral adaptions if possible.

The adaption component 420 is configured to adapt driving parameters for the automated vehicle to improve passenger comfort. This may start by increasing the gap (e.g., lead) between a leading vehicle by a following vehicle if the proximity of the vehicles is causing discomfort to the passenger. Actions such as braking, changing lanes, reducing rate of acceleration, etc., may be employed by the adaption component 420 to increase passenger comfort.

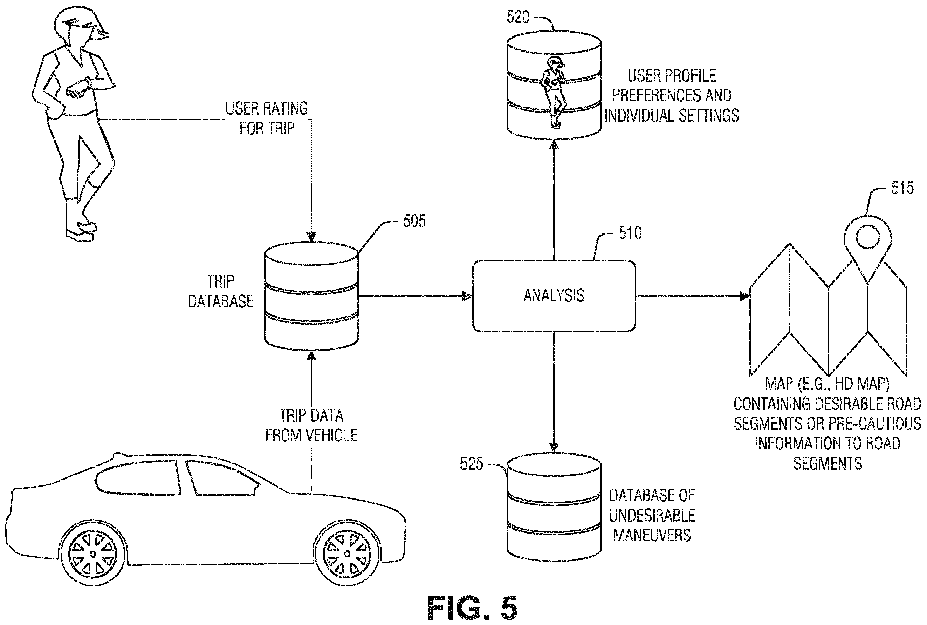

FIG. 5 illustrates an example of a system remote from a vehicle, according to an embodiment. The illustrated cloud-based system includes a trip database 505, user profile database 520, a database of undesirable maneuvers 525, and an analysis engine 510 that provides output to a map system 515.

Generally, the cloud-based system may perform data mining on passengers and trips to extract undesirable road segments or vehicle actions to enrich the map system 515 with information that may be used for future trips or by others to improve passenger $CL$ generally. When the user profile database 520 information is considered, driving behavior may be tweaked for individual preferences to further raise the $CL$ of a trip.

In an example, the cloud-based analysis system 510 receives input from the user—such as a general trip voting that may be performed via the MaaS mobile App—and from the vehicle used for the trip—e.g., created by the in-vehicle system. In an example, the trip data collection by the vehicle is configured to maintain user privacy by, for example, removing individual identifying information. In an example, only the $CL,$ maneuver and situation data is transferred to the trip database 505 from the vehicle. In an example, the trip data is transmitted as part of the standard communications between the vehicle and the MaaS service provider.

The data received from passengers and vehicles is stored in the trip database 505. The trip database 505 is provided as input to the analysis component 510. The analysis component 510 applies a number of analytical techniques—such as AI classification, AI regression fitting, clustering, etc.-to correlate details among trips and comfort levels in the trip database 505.

Upon detection of a correlation between a low or high comfort level and road segment in a sufficiently large group of trips, the map system 515 is updated. Therefore, road segments may be annotated with an average comfort level, such as a moving average to grant recent trips a higher influence. The comfort level may be leveraged by routing systems to, for example, avoid road segments with low comfort levels, or to favor road segments with high comfort levels.

In an example, automatic adaption of parameters may be applied for different road segments where the observation shows that, for example, traffic or traffic routing led to situations where traffic participants are forced to behave more aggressive. These situations may lead to more uncomfortable driving styles for many impacted vehicles. By adapting parameters pro-actively these situations may be mitigated and lead to more comfortable trips for the passengers. Safety system parameters, such as increasing buffer distances between vehicles, are an example parameter that may be automatically adapted in this way.

In an example, the database of undesirable maneuvers 525 may be created or updated. The database of undesirable maneuvers 525 may be accessed by the vehicles to update driving policies to avoid such maneuvers if possible. For example, a low preference may be given to trajectories that result in undesirable maneuvers.

The combination of the features described above may lead to improved passenger comfort on a variety of MaaS vehicles. The following scenario illustrates an overall experience using these systems. The experience may start with booking. When a user is booking a ride, a route is selected to deliver the user to a destination. Dependent on user input during booking, the user may be presented with a selection of possible routes that are likely to satisfy the user. For example, a fastest or a shortest route may be presented, and a route that makes use of the comfort settings of the user in combination with the comfort data in the map. The user may select which route of the several to take.

Upon starting the ride, the user (now passenger) profile is loaded by the vehicle. The vehicle may automatically adapt its driving style according to the user profile or settings in a MaaS mobile App (which may also be used for booking). The modified driving style may affect acceleration parameters, as well as road preferences, among other things. While the ride is ongoing, the vehicle continually monitors the passenger comfort.

After the ride is completed, the vehicle, the user, or both provide (e.g., upload) a digest on the ride experience or detected comfort levels to the cloud-based user profile. As a result, the ride experience will become better with each trip, and will help to ensure passenger satisfaction. In an example, the cloud-based ratings may be used to infer additional information, for example to detect critical vehicle behavior to avoid.

As noted above, the present techniques can improve human driving as well. Although automatic driving style adaption is not possible, a communication to a human driver to modify the driving style may result in greater passenger comfort. Further, the route selection (e.g., road segment labeling) may be used equally by automated and human driver systems alike. In fact, the map updates may be employed in vehicles without a passenger, such as bicycles or scooters.

The map data may also be used by managing entities, such as rail operators, highway operators, cities, states, counties, provinces, countries, etc. These entities parse the maps and extract road segments with low comfort levels. Then, for example, an inspection team may investigate these locations and inspect the segments and potentially fix for example holes in the road surface.

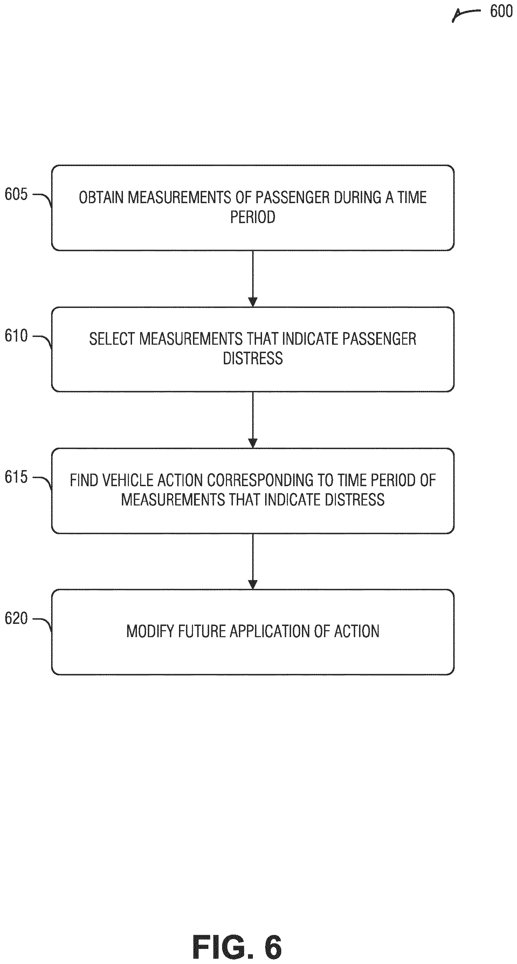

FIG. 6 illustrates a flow diagram of an example of a method 600 for passenger discomfort measurement during vehicle maneuver, according to an embodiment. The operations of the method 600 are performed by computer hardware, such as that described above with respect to FIGS. 1 and 3-5, or below (e.g., processing circuitry).

At operation 605, a set of biomechanical measurements of a passenger in the vehicle is obtained. In an example, a biomechanical measurement in the set of biomechanical measurements includes an applicable time period. In an example, to obtain the set of biomechanical measurements, a biomechanical measurement is retrieved from a device of the passenger. In an example, the device of the passenger is a wrist-worn device.

In an example, to obtain the set of biomechanical measurements, a sensor mounted in the vehicle is used to observe the passenger. In an example, the sensor is a camera. In an example, facial expressions are captured as biomechanical measurements.

In an example, the sensor is a microphone. In an example, vocal utterances of passenger are captured as biomechanical measurements.

At operation 610, a subset from the set of biomechanical measurements is selected. The members of the subset are members of the biomechanical measurements that correspond to distress in the passenger.

At operation 615, maneuvers performed by the vehicle are searched to find a maneuver operating in a time that overlaps a time period from a member of the subset.

At operation 620, a future application of the maneuver is modified in response to finding the maneuver. In an example, the maneuver includes an acceleration in a longitudinal, lateral, or vertical direction with respect to the vehicle. In an example, modifying a future application of the maneuver includes reducing the acceleration. In an example, the acceleration is based on a route traveled by the vehicle. Here, reducing the acceleration includes selecting a different route.

In an example, modifying the future application of the maneuver includes modifying a parameter of the maneuver for a current trip of the passenger. In an example, modifying the future application of the maneuver includes modifying a parameter of the maneuver for a future trip of the passenger. In an example, modifying the future application of the maneuver includes modifying a parameter of the maneuver for a different passenger.

In an example, modifying the future application of the maneuver includes collecting instances of distress across passengers with respect to the maneuver. Then, a parameter of the maneuver may be changed in response passing a statistical threshold with respect to the instances of distress.

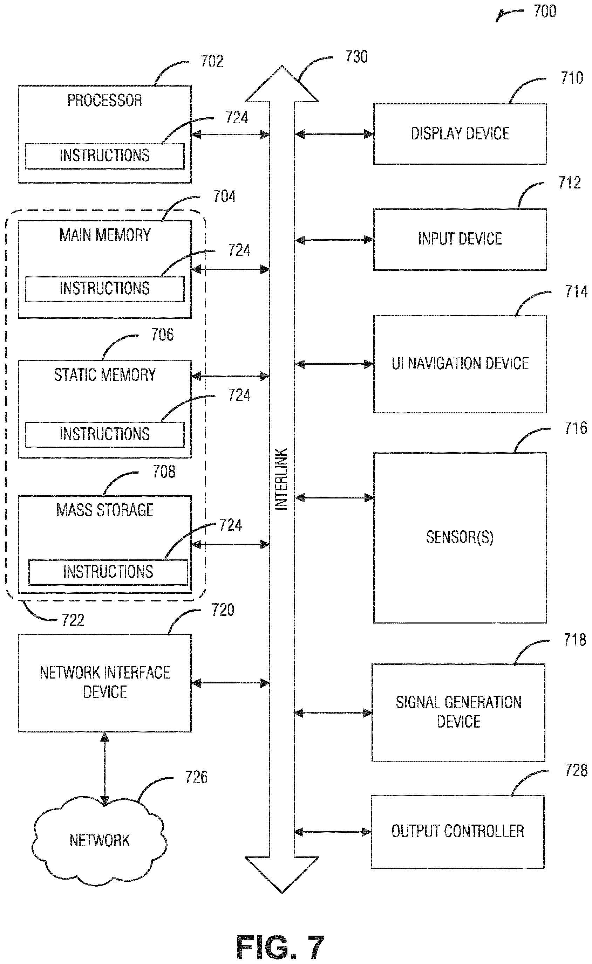

FIG. 7 illustrates a block diagram of an example machine 700 upon which any one or more of the techniques (e.g., methodologies) discussed herein may perform. Examples, as described herein, may include, or may operate by, logic or a number of components, or mechanisms in the machine 700. Circuitry (e.g., processing circuitry) is a collection of circuits implemented in tangible entities of the machine 700 that include hardware (e.g., simple circuits, gates, logic, etc.). Circuitry membership may be flexible over time. Circuitries include members that may, alone or in combination, perform specified operations when operating. In an example, hardware of the circuitry may be immutably designed to carry out a specific operation (e.g., hardwired). In an example, the hardware of the circuitry may include variably connected physical components (e.g., execution units, transistors, simple circuits, etc.) including a machine-readable medium physically modified (e.g., magnetically, electrically, moveable placement of invariant massed particles, etc.) to encode instructions of the specific operation. In connecting the physical components, the underlying electrical properties of a hardware constituent are changed, for example, from an insulator to a conductor or vice versa. The instructions enable embedded hardware (e.g., the execution units or a loading mechanism) to create members of the circuitry in hardware via the variable connections to carry out portions of the specific operation when in operation. Accordingly, in an example, the machine-readable medium elements are part of the circuitry or are communicatively coupled to the other components of the circuitry when the device is operating. In an example, any of the physical components may be used in more than one member of more than one circuitry. For example, under operation, execution units may be used in a first circuit of a first circuitry at one point in time and reused by a second circuit in the first circuitry, or by a third circuit in a second circuitry at a different time. Additional examples of these components with respect to the machine 700 follow.

In alternative embodiments, the machine 700 may operate as a standalone device or may be connected (e.g., networked) to other machines. In a networked deployment, the machine 700 may operate in the capacity of a server machine, a client machine, or both in server-client network environments. In an example, the machine 700 may act as a peer machine in peer-to-peer (P2P) (or other distributed) network environment. The machine 700 may be a personal computer (PC), a tablet PC, a set-top box (STB), a personal digital assistant (PDA), a mobile telephone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

The machine (e.g., computer system) 700 may include a hardware processor 702 (e.g., a central processing unit (CPU), a graphics processing unit (GPU), a hardware processor core, or any combination thereof), a main memory 704, a static memory (e.g., memory or storage for firmware, microcode, a basic-input-output (BIOS), unified extensible firmware interface (UEFI), etc.) 706, and mass storage 708 (e.g., hard drives, tape drives, flash storage, or other block devices) some or all of which may communicate with each other via an interlink (e.g., bus) 730. The machine 700 may further include a display unit 710, an alphanumeric input device 712 (e.g., a keyboard), and a user interface (UI) navigation device 714 (e.g., a mouse). In an example, the display unit 710, input device 712 and UI navigation device 714 may be a touch screen display. The machine 700 may additionally include a storage device (e.g., drive unit) 708, a signal generation device 718 (e.g., a speaker), a network interface device 720, and one or more sensors 716, such as a global positioning system (GPS) sensor, compass, accelerometer, or other sensor. The machine 700 may include an output controller 728, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

Registers of the processor 702, the main memory 704, the static memory 706, or the mass storage 708 may be, or include, a machine readable medium 722 on which is stored one or more sets of data structures or instructions 724 (e.g., software) embodying or utilized by any one or more of the techniques or functions described herein. The instructions 724 may also reside, completely or at least partially, within any of registers of the processor 702, the main memory 704, the static memory 706, or the mass storage 708 during execution thereof by the machine 700. In an example, one or any combination of the hardware processor 702, the main memory 704, the static memory 706, or the mass storage 708 may constitute the machine readable media 722. While the machine readable medium 722 is illustrated as a single medium, the term "machine readable medium" may include a single medium or multiple media (e.g., a centralized or distributed database, and/or associated caches and servers) configured to store the one or more instructions 724.

The term "machine readable medium" may include any medium that is capable of storing, encoding, or carrying instructions for execution by the machine 700 and that cause the machine 700 to perform any one or more of the techniques of the present disclosure, or that is capable of storing, encoding or carrying data structures used by or associated with such instructions. Non-limiting machine-readable medium examples may include solid-state memories, optical media, magnetic media, and signals (e.g., radio frequency signals, other photon-based signals, sound signals, etc.). In an example, a non-transitory machine-readable medium comprises a machine-readable medium with a plurality of particles having invariant (e.g., rest) mass, and thus are compositions of matter. Accordingly, non-transitory machine-readable media are machine readable media that do not include transitory propagating signals. Specific examples of non-transitory machine-readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; and CD-ROM and DVD-ROM disks.

In an example, information stored or otherwise provided on the machine readable medium 722 may be representative of the instructions 724, such as instructions 724 themselves or a format from which the instructions 724 may be derived. This format from which the instructions 724 may be derived may include source code, encoded instructions (e.g., in compressed or encrypted form), packaged instructions (e.g., split into multiple packages), or the like. The information representative of the instructions 724 in the machine readable medium 722 may be processed by processing circuitry into the instructions to implement any of the operations discussed herein. For example, deriving the instructions 724 from the information (e.g., processing by the processing circuitry) may include: compiling (e.g., from source code, object code, etc.), interpreting, loading, organizing (e.g., dynamically or statically linking), encoding, decoding, encrypting, unencrypting, packaging, unpackaging, or otherwise manipulating the information into the instructions 724.

In an example, the derivation of the instructions 724 may include assembly, compilation, or interpretation of the information (e.g., by the processing circuitry) to create the instructions 724 from some intermediate or preprocessed format provided by the machine readable medium 722. The information, when provided in multiple parts, may be combined, unpacked, and modified to create the instructions 724. For example, the information may be in multiple compressed source code packages (or object code, or binary executable code, etc.) on one or several remote servers. The source code packages may be encrypted when in transit over a network and decrypted, uncompressed, assembled (e.g., linked) if necessary, and compiled or interpreted (e.g., into a library, stand-alone executable etc.) at a local machine, and executed by the local machine.

The instructions 724 may be further transmitted or received over a communications network 726 using a transmission medium via the network interface device 720 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi®, IEEE 802.16 family of standards known as WiMax®), IEEE 802.15.4 family of standards, peer-to-peer (P2P) networks, among others. In an example, the network interface device 720 may include one or more physical jacks (e.g., Ethernet, coaxial, or phone jacks) or one or more antennas to connect to the communications network 726. In an example, the network interface device 720 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding or carrying instructions for execution by the machine 700, and includes digital or analog communications signals or other intangible medium to facilitate communication of such software. A transmission medium is a machine-readable medium.

Additional Notes & Examples

Example 1 is an apparatus for passenger discomfort measurement, the apparatus comprising: a memory including instructions; and processing circuitry that, when in operation, is configured by the instructions to: obtain a set of biomechanical measurements of a passenger in a vehicle during a time period; select a subset of the biomechanical measurements that indicate distress of the passenger; determine a vehicle action that corresponds to the timer period of biomechanical measurements that indicate distress; and modify a future application of the vehicle action based on the determination that the vehicle action corresponded to passenger distress.

In Example 2, the subject matter of Example 1 includes, wherein, to obtain the set of biomechanical measurements, the processing circuitry is configured to retrieve a biomechanical measurement from a device of the passenger.

In Example 3, the subject matter of Example 2 includes, wherein the device of the passenger is a wearable device.

In Example 4, the subject matter of Examples 1-3 includes, wherein, to obtain the set of biomechanical measurements, the processing circuitry is configured to use a sensor mounted in the vehicle to observe the passenger.

In Example 5, the subject matter of Example 4 includes, wherein the sensor is a camera.

In Example 6, the subject matter of Example 5 includes, wherein facial expressions are captured as biomechanical measurements.

In Example 7, the subject matter of Examples 4-6 includes, wherein the sensor is a microphone.

In Example 8, the subject matter of Example 7 includes, wherein vocal utterances of passenger are captured as biomechanical measurements.

In Example 9, the subject matter of Examples 1-8 includes, wherein the vehicle action includes an acceleration in a longitudinal, lateral, or vertical direction with respect to the vehicle.

In Example 10, the subject matter of Example 9 includes, wherein, to modify the future application of the vehicle action, the processing circuitry is configured to reduce the acceleration.

In Example 11, the subject matter of Example 10 includes, wherein the acceleration is based on a route traveled by the vehicle, and wherein, to reduce the acceleration, the processing circuitry is configured to select a different route.

In Example 12, the subject matter of Examples 1-11 includes, wherein, to modify the future application of the vehicle action, the processing circuitry is configured to modify a parameter of the vehicle action for a current trip of the passenger.

In Example 13, the subject matter of Examples 1-12 includes, wherein, to modify the future application of the vehicle action, the processing circuitry is configured to modify a parameter of the vehicle action for a future trip of the passenger.

In Example 14, the subject matter of Examples 1-13 includes, wherein to modify the future application of the vehicle action, the processing circuitry is configured to modify a parameter of the vehicle action for a different passenger.

In Example 15, the subject matter of Examples 1-14 includes, wherein, to modify the future application of the vehicle action, the processing circuitry is configured to: collect instances of distress across passengers with respect to the vehicle action; and change a parameter of the vehicle action in response passing a statistical threshold with respect to the instances of distress.

In Example 16, the subject matter of Example 15 includes, wherein, to collect instances of distress across passengers, the processing circuitry is configured to transmit the set of biomechanical measurements to a server that correlates distress among passengers from several vehicles over several trips using the statistical threshold, the distress corresponding to vehicle maneuvers or route segments; and wherein, to change the parameter of the vehicle action in responses to passing the statistical threshold, the processing circuitry is configured to receive the parameter from the server with regard to the maneuver or a route segment.

Example 17 is a method for passenger discomfort measurement, the method comprising: obtaining a set of biomechanical measurements of a passenger in a vehicle during a time period; selecting a subset of biomechanical measurements that indicate distress of the passenger; determining a vehicle action that corresponds to the time period of biomechanical measurements that indicate distress; and modifying a future application of the vehicle action based on the determination that the vehicle action corresponded to passenger distress.

In Example 18, the subject matter of Example 17 includes, wherein obtaining the set of biomechanical measurements includes retrieving a biomechanical measurement from a device of the passenger.

In Example 19, the subject matter of Example 18 includes, wherein the device of the passenger is a wearable device.

In Example 20, the subject matter of Examples 17-19 includes, wherein obtaining the set of biomechanical measurements includes using a sensor mounted in the vehicle to observe the passenger.

In Example 21, the subject matter of Example 20 includes, wherein the sensor is a camera.

In Example 22, the subject matter of Example 21 includes, wherein facial expressions are captured as biomechanical measurements.

In Example 23, the subject matter of Examples 20-22 includes, wherein the sensor is a microphone.

In Example 24, the subject matter of Example 23 includes, wherein vocal utterances of passenger are captured as biomechanical measurements.

In Example 25, the subject matter of Examples 17-24 includes, wherein the vehicle action includes an acceleration in a longitudinal, lateral, or vertical direction with respect to the vehicle.

In Example 26, the subject matter of Example 25 includes, wherein modifying a future application of the vehicle action includes reducing the acceleration.

In Example 27, the subject matter of Example 26 includes, wherein the acceleration is based on a route traveled by the vehicle, and wherein reducing the acceleration includes selecting a different route.

In Example 28, the subject matter of Examples 17-27 includes, wherein modifying the future application of the vehicle action includes modifying a parameter of the vehicle action for a current trip of the passenger.

In Example 29, the subject matter of Examples 17-28 includes, wherein modifying the future application of the vehicle action includes modifying a parameter of the vehicle action for a future trip of the passenger.

In Example 30, the subject matter of Examples 17-29 includes, wherein modifying the future application of the vehicle action includes modifying a parameter of the vehicle action for a different passenger.

In Example 31, the subject matter of Examples 17-30 includes, wherein modifying the future application of the vehicle action includes: collecting instances of distress across passengers with respect to the vehicle action; and changing a parameter of the vehicle action in response passing a statistical threshold with respect to the instances of distress.

In Example 32, the subject matter of Example 31 includes, wherein collecting instances of distress across passengers includes transmitting the set of biomechanical measurements to a server that correlates distress among passengers from several vehicles over several trips using the statistical threshold, the distress corresponding to vehicle maneuvers or route segments; and wherein changing the parameter of the vehicle action in responses to passing the statistical threshold includes receiving the parameter from the server with regard to the maneuver or a route segment.

Example 33 is at least one machine-readable medium including instructions that, when executed by processing circuitry, cause the processing circuitry to perform operations comprising: obtaining a set of biomechanical measurements of a passenger in a vehicle during a time period; selecting a subset of biomechanical measurements that indicate distress of the passenger; determining a vehicle action that corresponds to the time period of biomechanical measurements that indicate distress; and modifying a future application of the vehicle action based on the determination that the vehicle action corresponded to passenger distress.

In Example 34, the subject matter of Example 33 includes, wherein obtaining the set of biomechanical measurements includes retrieving a biomechanical measurement from a device of the passenger.

In Example 35, the subject matter of Example 34 includes, wherein the device of the passenger is a wearable device.

In Example 36, the subject matter of Examples 33-35 includes, wherein obtaining the set of biomechanical measurements includes using a sensor mounted in the vehicle to observe the passenger.

In Example 37, the subject matter of Example 36 includes, wherein the sensor is a camera.

In Example 38, the subject matter of Example 37 includes, wherein facial expressions are captured as biomechanical measurements.

In Example 39, the subject matter of Examples 36-38 includes, wherein the sensor is a microphone.

In Example 40, the subject matter of Example 39 includes, wherein vocal utterances of passenger are captured as biomechanical measurements.

In Example 41, the subject matter of Examples 33-40 includes, wherein the vehicle action includes an acceleration in a longitudinal, lateral, or vertical direction with respect to the vehicle.

In Example 42, the subject matter of Example 41 includes, wherein modifying a future application of the vehicle action includes reducing the acceleration.

In Example 43, the subject matter of Example 42 includes, wherein the acceleration is based on a route traveled by the vehicle, and wherein reducing the acceleration includes selecting a different route.

In Example 44, the subject matter of Examples 33-43 includes, wherein modifying the future application of the vehicle action includes modifying a parameter of the vehicle action for a current trip of the passenger.

In Example 45, the subject matter of Examples 33-44 includes, wherein modifying the future application of the vehicle action includes modifying a parameter of the vehicle action for a future trip of the passenger.

In Example 46, the subject matter of Examples 33-45 includes, wherein modifying the future application of the vehicle action includes modifying a parameter of the vehicle action for a different passenger.

In Example 47, the subject matter of Examples 33-46 includes, wherein modifying the future application of the vehicle action includes: collecting instances of distress across passengers with respect to the vehicle action; and changing a parameter of the vehicle action in response passing a statistical threshold with respect to the instances of distress.

In Example 48, the subject matter of Example 47 includes, wherein collecting instances of distress across passengers includes transmitting the set of biomechanical measurements to a server that correlates distress among passengers from several vehicles over several trips using the statistical threshold, the distress corresponding to vehicle maneuvers or route segments; and wherein changing the parameter of the vehicle action in responses to passing the statistical threshold includes receiving the parameter from the server with regard to the maneuver or a route segment.

Example 49 is a system for passenger discomfort measurement, the system comprising: means for obtaining a set of biomechanical measurements of a passenger in a vehicle during a time period; means for selecting a subset of biomechanical measurements that indicate distress of the passenger; means for determining a vehicle action that corresponds to the time period of biomechanical measurements that indicate distress; and means for modifying a future application of the vehicle action based on the determination that the vehicle action corresponded to passenger distress.

In Example 50, the subject matter of Example 49 includes, wherein the means for obtaining the set of biomechanical measurements include means for retrieving a biomechanical measurement from a device of the passenger.

In Example 51, the subject matter of Example 50 includes, wherein the device of the passenger is a wrist-worn device.

In Example 52, the subject matter of Examples 49-51 includes, wherein the means for obtaining the set of biomechanical measurements include means for using a sensor mounted in the vehicle to observe the passenger.

In Example 53, the subject matter of Example 52 includes, wherein the sensor is a camera.

In Example 54, the subject matter of Example 53 includes, wherein facial expressions are captured as biomechanical measurements.

In Example 55, the subject matter of Examples 52-54 includes, wherein the sensor is a microphone.

In Example 56, the subject matter of Example 55 includes, wherein vocal utterances of passenger are captured as biomechanical measurements.

In Example 57, the subject matter of Examples 49-56 includes, wherein the vehicle action includes an acceleration in a longitudinal, lateral, or vertical direction with respect to the vehicle.

In Example 58, the subject matter of Example 57 includes, wherein the means for modifying a future application of the vehicle action include means for reducing the acceleration.

In Example 59, the subject matter of Example 58 includes, wherein the acceleration is based on a route traveled by the vehicle, and wherein the means for reducing the acceleration include means for selecting a different route.

In Example 60, the subject matter of Examples 49-59 includes, wherein the means for modifying the future application of the vehicle action include means for modifying a parameter of the vehicle action for a current trip of the passenger.

In Example 61, the subject matter of Examples 49-60 includes, wherein means for modifying the future application of the vehicle action include means for modifying a parameter of the vehicle action for a future trip of the passenger.

In Example 62, the subject matter of Examples 49-61 includes, wherein means for modifying the future application of the vehicle action include means for modifying a parameter of the vehicle action for a different passenger.

In Example 63, the subject matter of Examples 49-62 includes, wherein the means for modifying the future application of the vehicle action include: means for collecting instances of distress across passengers with respect to the vehicle action; and means for changing a parameter of the vehicle action in response passing a statistical threshold with respect to the instances of distress.

In Example 64, the subject matter of Example 63 includes, the means for wherein collecting instances of distress across passengers include means for transmitting the set of biomechanical measurements to a server that correlates distress among passengers from several vehicles over several trips using the statistical threshold, the distress corresponding to vehicle maneuvers or route segments; and wherein the means for changing the parameter of the vehicle action in responses to passing the statistical threshold include means for receiving the parameter from the server with regard to the maneuver or a route segment.

Example 65 is at least one machine-readable medium including instructions that, when executed by processing circuitry, cause the processing circuitry to perform operations to implement of any of Examples 1-64.

Example 66 is an apparatus comprising means to implement of any of Examples 1-64.

Example 67 is a system to implement of any of Examples 1-64.

Example 68 is a method to implement of any of Examples 1-64.

The above detailed description includes references to the accompanying drawings, which form a part of the detailed description. The drawings show, by way of illustration, specific embodiments that may be practiced. These embodiments are also referred to herein as "examples." Such examples may include elements in addition to those shown or described. However, the present inventors also contemplate examples in which only those elements shown or described are provided. Moreover, the present inventors also contemplate examples using any combination or permutation of those elements shown or described (or one or more aspects thereof), either with respect to a particular example (or one or more aspects thereof), or with respect to other examples (or one or more aspects thereof) shown or described herein.

All publications, patents, and patent documents referred to in this document are incorporated by reference herein in their entirety, as though individually incorporated by reference. In the event of inconsistent usages between this document and those documents so incorporated by reference, the usage in the incorporated reference(s) should be considered supplementary to that of this document; for irreconcilable inconsistencies, the usage in this document controls.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

The above description is intended to be illustrative, and not restrictive. For example, the above-described examples (or one or more aspects thereof) may be used in combination with each other. Other embodiments may be used, such as by one of ordinary skill in the art upon reviewing the above description. The Abstract is to allow the reader to quickly ascertain the nature of the technical disclosure and is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description, with each claim standing on its own as a separate embodiment. The scope of the embodiments should be determined with reference to the appended claims, along with the full scope of equivalents to which such claims are entitled.

**Claims**

1. An apparatus for passenger discomfort measurement, the apparatus comprising:

   a memory including instructions; and
   processing circuitry that, when in operation, is configured by the instructions to:

   obtain a set of biomechanical measurements of a passenger in a vehicle during a time period;
   select a subset of the biomechanical measurements that indicate distress of the passenger;
   determine a vehicle action that corresponds to the timer period of biomechanical measurements that indicate distress; and
   modify a future application of the vehicle action based on the determination that the vehicle action corresponded to passenger distress.

2. The apparatus of claim 1, wherein, to obtain the set of biomechanical measurements, the processing circuitry is configured to retrieve a biomechanical measurement from a device of the passenger.

3. The apparatus of claim 2, wherein the device of the passenger is a wearable device.

4. The apparatus of one of the previous claims, wherein, to obtain the set of biomechanical measurements, the processing circuitry is configured to use a sensor mounted in the vehicle to observe the passenger.

5. The apparatus of claim 4, wherein the sensor is a camera.

6. The apparatus of claim 5, wherein facial expressions are captured as biomechanical measurements.

7. The apparatus of claim 4, 5 or 6, wherein the sensor is a microphone.

8. The apparatus of claim 7, wherein vocal utterances of passenger are captured as biomechanical measurements.

9. The apparatus of one of the previous claims, wherein the vehicle action includes an acceleration in a longitudinal, lateral, or vertical direction with respect to the vehicle.

10. The apparatus of claim 9, wherein, to modify the future application of the vehicle action, the processing circuitry is configured to reduce the acceleration.

11. The apparatus of claim 10, wherein the acceleration is based on a route traveled by the vehicle, and wherein, to reduce the acceleration, the processing circuitry is configured to select a different route.

12. The apparatus of one of the previous claims, wherein, to modify the future application of the vehicle action, the processing circuitry is configured to modify a parameter of the vehicle action for a current trip of the passenger.

13. The apparatus of one of the previous claims, wherein, to modify the future application of the vehicle action, the processing circuitry is configured to modify a parameter of the vehicle action for a future trip of the passenger.

14. The apparatus of one of the previous claims, wherein to modify the future application of the vehicle action, the processing circuitry is configured to modify a parameter of the vehicle action for a different passenger.

15. At least one machine-readable medium including instructions that, when executed by processing circuitry, cause the processing circuitry to perform operations comprising:

obtaining a set of biomechanical measurements of a passenger in a vehicle during a time period;
selecting a subset of biomechanical measurements that indicate distress of the passenger;
determining a vehicle action that corresponds to the time period of biomechanical measurements that indicate distress; and
modifying a future application of the vehicle action based on the determination that the vehicle action corresponded to passenger distress.

**FIG. 1**

**FIG. 2**

FIG. 3

FIG. 4

EP 4 019 356 A1

USER RATING FOR TRIP

520 — USER PROFILE PREFERENCES AND INDIVIDUAL SETTINGS

505 TRIP DATABASE

510 ANALYSIS

515

TRIP DATA FROM VEHICLE

525 DATABASE OF UNDESIRABLE MANEUVERS

MAP (E.G., HD MAP) CONTAINING DESIRABLE ROAD SEGMENTS OR PRE-CAUTIOUS INFORMATION TO ROAD SEGMENTS

**FIG. 5**

600

```
605 ─┐  ┌─────────────────────────────────────────┐
        │  OBTAIN MEASUREMENTS OF PASSENGER DURING A TIME │
        │                  PERIOD                         │
        └─────────────────────────────────────────┘
                          │
                          ▼
610 ─┐  ┌─────────────────────────────────────────┐
        │  SELECT MEASUREMENTS THAT INDICATE PASSENGER    │
        │                 DISTRESS                        │
        └─────────────────────────────────────────┘
                          │
                          ▼
615 ─┐  ┌─────────────────────────────────────────┐
        │  FIND VEHICLE ACTION CORRESPONDING TO TIME PERIOD OF │
        │    MEASUREMENTS THAT INDICATE DISTRESS          │
        └─────────────────────────────────────────┘
                          │
                          ▼
620 ─┐  ┌─────────────────────────────────────────┐
        │       MODIFY FUTURE APPLICATION OF ACTION       │
        └─────────────────────────────────────────┘
```

# FIG. 6

700

702

PROCESSOR

724

INSTRUCTIONS

730

710

DISPLAY DEVICE

712

INPUT DEVICE

704

MAIN MEMORY

724

INSTRUCTIONS

714

UI NAVIGATION DEVICE

706

STATIC MEMORY

724

INSTRUCTIONS

716

708

MASS STORAGE

724

INSTRUCTIONS

SENSOR(S)

INTERLINK

722

720

NETWORK INTERFACE DEVICE

718

SIGNAL GENERATION DEVICE

726

NETWORK

728

OUTPUT CONTROLLER

FIG. 7

Europäisches
Patentamt

European
Patent Office

Office européen
des brevets

# EUROPEAN SEARCH REPORT

Application Number

EP 21 19 8512

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/125989 A1 (SUCAN IOAN-ALEXANDRU [US] ET AL) 23 April 2020 (2020-04-23) * paragraphs [0002] – [0003], [0020] – [0021], [0033], [0056] – [0058] * * paragraphs [0066], [0069] – [0070], [0075], [0084] * * figures 1,2,4,6 * ----- | 1-6,9-15 | INV. B60W50/00 B60W60/00 B60W40/09 G06V20/59 G06V40/16 |
| X | US 2020/331459 A1 (SZCZERBA JOSEPH F [US]) 22 October 2020 (2020-10-22) * claims 1,2,7,11,12,16,18 * ----- | 1-15 | |
| X | EP 3 620 336 A1 (HERE GLOBAL BV [NL]) 11 March 2020 (2020-03-11) * paragraphs [0032] – [0034], [0046] – [0047], [0050] – [0052], [0060] * ----- | 1-15 | |
| X | US 2016/264131 A1 (CHAN ALISTAIR K [US] ET AL) 15 September 2016 (2016-09-15) * paragraphs [0025], [0034] – [0037] * * figures 1,5 * ----- | 1 | |

TECHNICAL FIELDS
SEARCHED (IPC)

B60W

The present search report has been drawn up for all claims

| Place of search | Date of completion of the search | Examiner |
|---|---|---|
| Munich | 10 March 2022 | Laiou, M |

EPO FORM 1503 03.82 (P04C01)

## ANNEX TO THE EUROPEAN SEARCH REPORT
## ON EUROPEAN PATENT APPLICATION NO.

EP 21 19 8512

This annex lists the patent family members relating to the patent documents cited in the above-mentioned European search report.
The members are as contained in the European Patent Office EDP file on
The European Patent Office is in no way liable for these particulars which are merely given for the purpose of information.

10-03-2022

| Patent document cited in search report | | Publication date | Patent family member(s) | | Publication date |
|---|---|---|---|---|---|
| US 2020125989 | A1 | 23-04-2020 | CN 112955362 A | | 11-06-2021 |
| | | | EP 3849867 A1 | | 21-07-2021 |
| | | | US 2020125989 A1 | | 23-04-2020 |
| | | | WO 2020081287 A1 | | 23-04-2020 |
| US 2020331459 | A1 | 22-10-2020 | DE 102020106746 A1 | | 22-10-2020 |
| | | | US 2020331459 A1 | | 22-10-2020 |
| | | | US 2020331481 A1 | | 22-10-2020 |
| EP 3620336 | A1 | 11-03-2020 | EP 3620336 A1 | | 11-03-2020 |
| | | | US 2020079385 A1 | | 12-03-2020 |
| US 2016264131 | A1 | 15-09-2016 | CN 107531236 A | | 02-01-2018 |
| | | | EP 3268250 A1 | | 17-01-2018 |
| | | | US 2016264131 A1 | | 15-09-2016 |
| | | | US 2017282912 A1 | | 05-10-2017 |
| | | | US 2019135274 A1 | | 09-05-2019 |
| | | | WO 2016144631 A1 | | 15-09-2016 |

EPO FORM P0459

For more details about this annex : see Official Journal of the European Patent Office, No. 12/82